# EUROPEAN PATENT APPLICATION

(11) **EP 1 816 386 A1**
(43) Date of publication of application: **08.08.2007**
(21) Application number: 07002474.0
(22) Date of filing: 06.02.2007
(51) Int. Cl.: F16L 41/03

(54) **Energy transfer system**

(30) Priority: 07.02.2006 NL 1031093; 08.03.2006 NL 1031323
(71) Applicant: H.A. Prince Beheer Bergen op Zoom B.V., 4691 RX Tholen (NL)
(72) Inventor: Prince, Hendrikus Andreas, 4624 CP Bergen op Zoom (NL)
(74) Representative: D'Halleweyn, Nele Veerle Trees Gertrudis

(57) **Abstract**

System for transferring energy, comprising at least one pipe network (31, 32, 33) for regulating the temperature of the vicinity of this pipe network, in particular a house; an energy storage system located in the ground which makes use of ground heat; at least one distribution feed and distribution discharge conduit (T, A) between the energy storage system and each pipe network; wherein each pipe network is connected via a connecting box to the distribution conduits (T, A), in which connecting box are accommodated a distribution feed pipe and a distribution discharge pipe (10, 11) which are connected on one side to respectively the distribution feed and discharge conduits (T, A) and which are provided on the other side with connecting points for the outer ends (12, 12') of the pipe networks, this connecting box being provided with at least eight openings (14) allowing passage of the outer ends (12, 12') of the pipe networks.

## Description

The invention relates to a system for transferring energy, comprising:
- at least one pipe network for regulating the temperature of the vicinity of this pipe network, in particular a house;
- an energy storage system located in the ground which makes use of ground heat;
- at least one distribution feed and distribution discharge conduit between the energy storage system and each pipe network.

According to the known systems the pipe networks are connected using electrically welded sleeves to the distribution feed and distribution discharge conduit (the main conduit). Such a system has the drawback that if problems occur in one pipe network, which is located for instance in a house, the entire distribution system must be closed off in order to allow the problems to be solved. In order to perform the necessary operations a pit about 1 m deep typically has to be dug here at the location where the pipe network is connected to the main conduit.

The object of the present invention is to propose a system for transferring energy, in particular heat, between an energy store and a space to be heated or cooled. This system must particularly allow leakage problems to be solved in simple manner.

For this purpose the invention is distinguished in that each pipe network is connected via a connecting box to the distribution conduits, in which connecting box are accommodated a distribution feed pipe and a distribution discharge pipe which are connected on one side to respectively the distribution feed and discharge conduits and which are provided on the other side with connecting points for the outer ends of the pipe networks, this connecting box being provided with at least eight openings allowing passage of the outer ends of the pipe networks.

Such a system allows simple installation of a ground heat network. By making use of connecting boxes with distribution pipes repair operations can be performed in simple manner without large parts of the network having to be closed off. Such a connecting box furthermore provides protection for the connecting points and allows easy digging out of the box.

Advantageous embodiments are described in the dependent claims.

The invention will be further elucidated on the basis of the figure description hereinbelow and the accompanying drawing, in which a number of non-limitative exemplary embodiments of the invention are discussed. In the drawing:
figure 1 shows a schematic view of an embodiment of the system according to the invention;
figure 2 shows a schematic top view of a first embodiment of a connected connecting box of a system according to the invention;
figure 3 shows a perspective view of the first embodiment of a non-connected connecting box of a system according to the invention;
figure 4 is a side view of the first embodiment of figure 3;
figure 5(A) shows a side and top view of the cover of a second embodiment of a non-connected connecting box of system according to the invention;
figure 5(B) is a top view of the holder of the second embodiment;
figure 5 C) is a side view of the connecting box of the second embodiment;
figure 5(D) shows a detail view of the connecting points for the pipe networks in a system according to the invention.

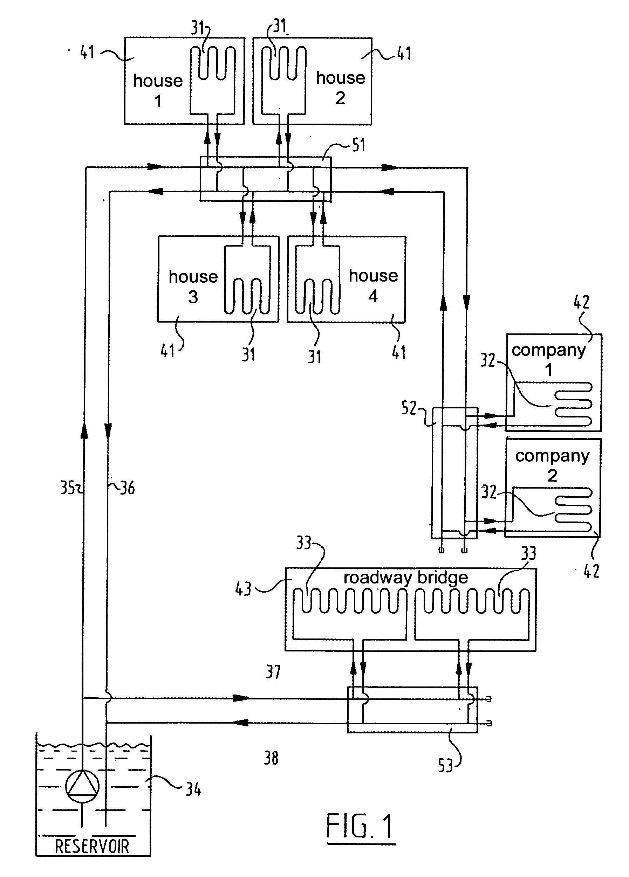

Figure 1 shows a system for transferring energy, comprising:
- three groups of pipe networks 31, 32, 33 for regulating the temperature of respectively a first group of houses 41 (houses 1-4), a second group of company premises 42 (companies 1 and 2), and the roadway of a bridge 43;
- an energy storage system 34 which is situated in the ground and makes use of ground heat;
- a first distribution feed conduit 35 and distribution discharge conduit 36 between energy storage system 34 and pipe networks 31, 32, and a second distribution feed conduit 37 and distribution discharge conduit 38 between energy storage system 34 and pipe network 33.

Each pipe network of 31, 32, 33 is connected in each case via a connecting box 51, 52, 53 to distribution conduits 35, 36, 37, 38.

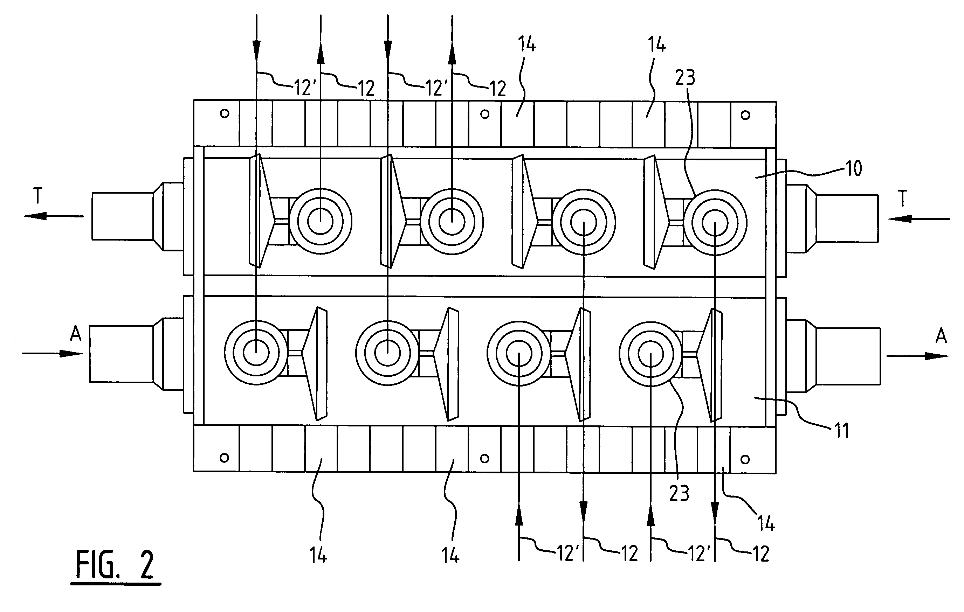

A possible embodiment of such a connecting box will be described with reference to figures 2, 3 and 4.

A possible connection is shown schematically in figure 2. The fluid, typically water, is supplied from the energy store, enters the connecting box through distribution feed pipe 10 and is carried via a tap 23 to the pipe networks. The water, which has typically relinquished a part of its energy to the environment, is subsequently discharged by means of a distribution discharge pipe 11. This distribution pipe 11 is also provided with four connecting points to which, in each case via a tap 23, the outer ends 12' of the pipe networks are connected. Note that it is also possible by means of such a system to cool the vicinity of the pipe network, for instance by sending through the pipe network cold water which, after passing through the pipe network, is discharged in slightly heated state.

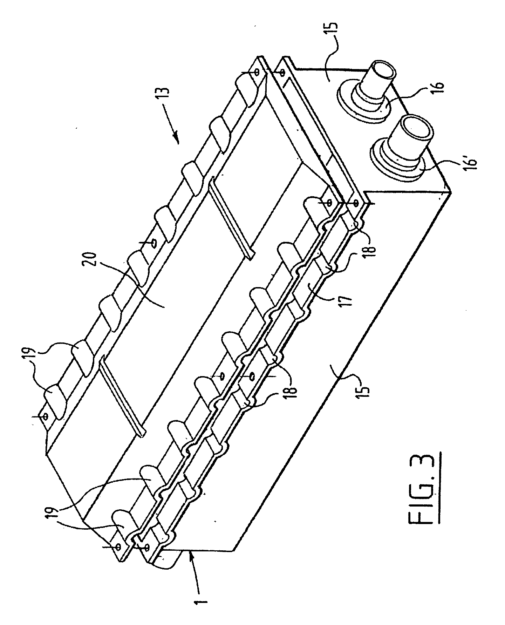

In the embodiment of figures 2 and 3 the connecting box is provided with two sets of eight openings in which the outer ends 12, 12' of the pipe networks can be received. In the openings (14) which are not used sealing plugs can be placed in order to avoid waste or other undesirable material entering the connecting box.

Figure 3 shows a perspective view of an embodiment of a connecting box for a system according to the invention. The assembly consists of a holder 1 and a cover 13. For each distribution pipe two distribution openings 16, 16' are arranged in two opposite walls 15 of holder 1. Holder 1 is provided along both sides on its upper edge with a substantially horizontal flange 17 in which semicircular channels 18 are arranged. These channels co-act with the semicircular channels 19 arranged in the lower edge of cover 13, so that channel-like passages (openings 14 in figure 2) are formed when the cover is placed on the holder. Cover 13 takes a profiled form and the middle part 20 thereof takes an elevated form in order to provide sufficient space for connection of pipe ends 12, 12' of the pipe networks to distribution pipes 10, 11.

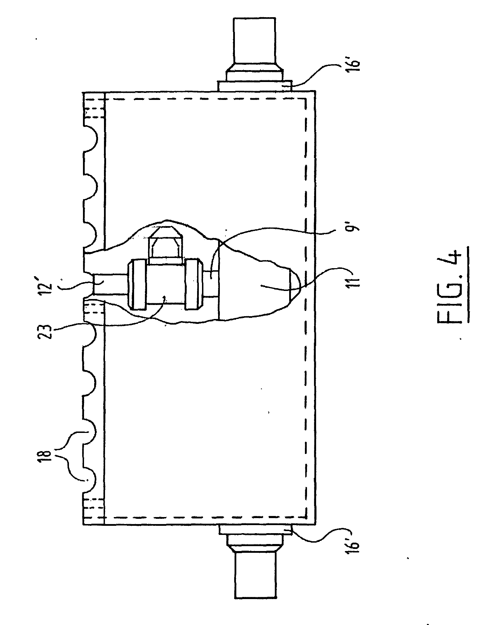

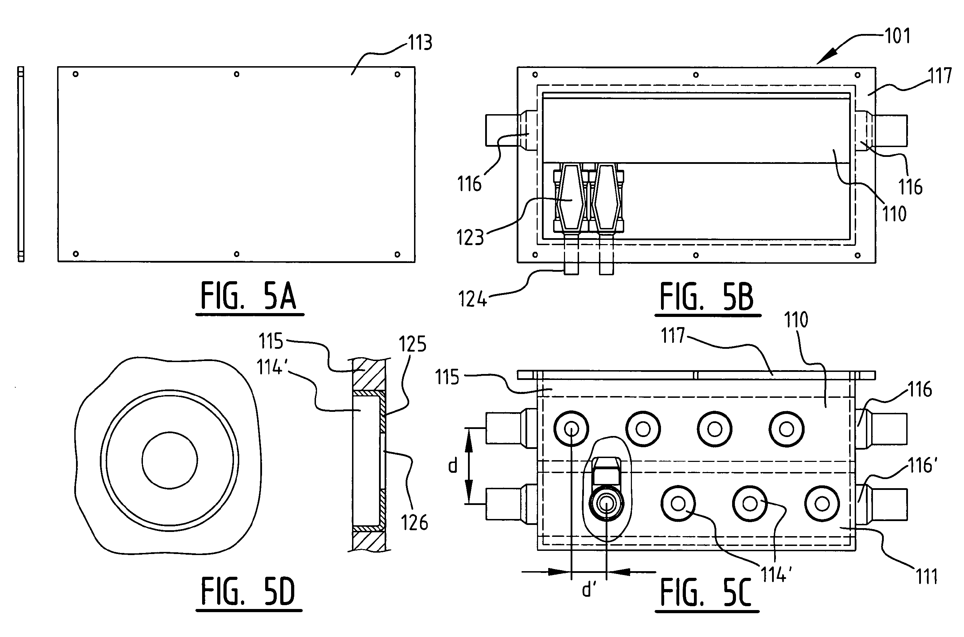

As best seen in figure 2, the feed conduit, which is a pressure line, typically has a smaller diameter than the discharge conduit. Tap devices 23 (see figures 2 and 4) are further provided between the connecting points and outer ends 12, 12' of the pipe networks so that a pipe network can be closed in simple manner without the remaining distribution system thereby being disrupted. Figures 5(A)-(D) show a second embodiment of a connecting box according to the invention. The connecting box comprises a holder 101 and a cover 113. Holder 101 has a bottom and four upright walls, and is provided with an upper flange 117 on which the cover can be placed. Holes are provided in upper flange 117 and in cover 123 so that the cover can be fixed onto the upper flange by means of bolts and nuts. Two distribution pipes 110, 111 are arranged one above the other in the connecting box. One of these distribution pipes is typically used to supply water and the other to discharge water. Eight openings 114, 114' are arranged in one of the upright walls 115 of holder 101. Openings 114, 114' are arranged spread over a first and a second, lower-lying horizontal row. The distance d between the two rows of openings is typically defined as a function of the pipe networks to be connected, and preferably allows an almost straight connection of the pipe networks. Openings 114 of the first row are further offset, preferably through a distance d' in horizontal direction, relative to openings 114' of the second row such that openings 114 of the first row lie obliquely above the openings of the second row 114'. Provided between each opening 114, 114' and the distribution pipe 110, 111 lying opposite is a tap 123 which is connected at one end to the corresponding distribution pipe and is connected at its other end via a connecting element 124 to a pipe network. The advantage of such a device is that straight connection of the pipe networks can take place, whereby it is possible to avoid air entering the distribution pipes.

In order to seal the space between the peripheral edge of opening 114 and connecting element 124 a channel plug 125 with an opening 126 adapted to connecting element 124 is arranged in opening 114. The diameter of openings 114,

114' is chosen such that connecting element 124 is easy to replace after removal of channel plug 125.

The skilled person will appreciate that many modifications of the above described embodiments of the system and the connecting box according to the invention are possible without departing from the scope of the invention. The number of openings in the connecting box can thus be variable, and the distribution pipes can be arranged in random manner in a connecting box. The invention is not limited to the above described exemplary embodiments of the invention, but is defined by the scope of protection of the following claims.

## Claims

1. System for transferring energy, comprising:
- at least one pipe network (31, 32, 33) for regulating the temperature of the vicinity of this pipe network, in particular a house;
- an energy storage system located in the ground which makes use of ground heat;
- at least one distribution feed and distribution discharge conduit (T, A) between the energy storage system and each pipe network; **characterized in that**
each pipe network is connected via a connecting box to the distribution conduits (T, A),
in which connecting box are accommodated a distribution feed pipe and a distribution discharge pipe (10, 11) which are connected on one side to respectively the distribution feed and discharge conduits (T, A) and which are provided on the other side with connecting points for the outer ends (12, 12') of the pipe networks, this connecting box being provided with at least eight openings (14) allowing passage of the outer ends (12, 12') of the pipe networks.

2. System as claimed in claim 1, **characterized in that** the pipe network is arranged in one of the following elements: one or more houses, a roadway, a bridge, an airport, industrial premises.

3. System as claimed in any of the foregoing claims, **characterized in that** the location of the openings (14, 114) in the connecting box is defined as a function of the pipe networks to be connected, and in particular allows a straight connection of the pipe networks.

4. System as claimed in any of the foregoing claims, **characterized in that** the openings (114, 114') are arranged spread over a first and a second, lower-lying, horizontal row in the same upright wall (115) of the connecting box (101).

5. System as claimed in claim 4, **characterized in that** the openings (114) of the first row lie obliquely above the openings of the second row (114').

6. System as claimed in any of the foregoing claims, **characterized in that** the distribution pipes (110,111) can be arranged one above the other in the connecting box.

7. System as claimed in claim 4 or 5 and claim 6, **characterized in that** a distribution pipe is arranged substantially parallel to each row of openings in the connecting box, and that there is provided between an opening and the opposite distribution pipe (110,111) a tap (123) which is connected at one end to the distribution pipe and can be connected at its other end via the corresponding opening to a pipe network.

8. System as claimed in any of the foregoing claims, **characterized in that** sealing means, such as a channel plug (125) with an opening (126) arranged therein, are provided between the peripheral edge of an opening (114, 114') and a connecting element for a pipe network protruding through the opening.

9. System as claimed in any of the claims 1-4, **characterized in that** the connecting box comprises a holder (1) with upright walls (15) and a cover (13) fitting thereon, and that the openings (14) are formed by recesses (18, 19) arranged at the position of the connection between the upright walls (15) and the cover (13).

10. System as claimed in any of the foregoing claims, **characterized in that** for each distribution pipe (10, 11) two distribution openings (16, 16') are arranged in the connecting box, which openings can be connected to the respective outer ends of the distribution pipe (10, 11), these respective outer ends preferably being specially adapted for the coupling to the feed and discharge conduit (T, A).

11. System as claimed in any of the foregoing claims, **characterized in that** the outer ends (12, 12') of each pipe network are connected via a tap (23) to the distribution pipes (10, 11).

12. System as claimed in any of the foregoing claims, **characterized in that** the holder (1) and the cover (13) are manufactured from plastic.

13. System as claimed in any of the foregoing claims, **characterized in that** the unused openings (14) are sealed, for instance using sealing plugs.

14. Method for installing a system as claimed in any of the foregoing claims, **characterized in that** a number of connecting boxes (1) are selected in accordance with the number of pipe networks to be connected, wherein an upright wall (15) of a connecting box (1) equipped with two distribution openings (16, 16') is placed opposite an upright wall of a subsequent selected connecting box (1) equipped with two distribution openings (16, 16'), and the corresponding one or more distribution openings (16, 16') are coupled to each other, these steps being repeated until all selected connecting boxes (1) are coupled to each other.

15. Connecting box for use in a system as claimed in any of the claims 1-13, in particular with the characteristics of any of the claims 4-8.

16. Use of a connecting box, in particular with the characteristics of any of the claims 4-8, in a system as claimed in any of the claims 1-13.
